# EUROPÄISCHE PATENTSCHRIFT

(11) **EP 1 934 064 B1**
(45) Veröffentlichungstag und Bekanntmachung des Hinweises auf die Patenterteilung: **23.12.2009**
(21) Anmeldenummer: 06806177.9
(22) Anmeldetag: 11.10.2006
(51) Int. Cl.: B60H 1/00

(54) **VERFAHREN ZUM REGELN EINER KLIMAANLAGE EINES FAHRZEUGS, DESSEN VERDECK GEÖFFNET IST**
METHOD FOR CONTROLLING AN AIR-CONDITIONING SYSTEM OF A VEHICLE WHOSE TOP IS OPENED
PROCEDE DE REGLAGE D'UNE INSTALLATION DE CLIMATISATION D'UN VEHICULE DONT LA CAPOTE EST OUVERTE

(30) Priorität: 12.10.2005 DE 102005048833
(43) Veröffentlichungstag der Anmeldung: 25.06.2008
(73) Patentinhaber: Volkswagen Aktiengesellschaft, 38436 Wolfsburg (DE)
(72) Erfinder: HELMS, Karsten, 38553 Wasbütteln (DE)
(74) Vertreter: Pohlmann, Bernd Michael
(86) Internationale Anmeldenummer: PCT/EP2006/009806
(87) Internationale Veröffentlichungsnummer: WO 2007/042268

(56) Entgegenhaltungen:
- EP-A1- 1 518 730
- WO-A-2004/052668
- DE-A1- 10 235 580
- DE-B3- 10 342 985

## Beschreibung

Die vorliegende Erfindung betrifft ein Verfahren zum Regeln einer Klimaanlage eines Fahrzeugs, dessen Verdeck geöffnet ist. Bei dem Fahrzeug handelt es sich insbesondere um ein Cabriofahrzeug. Das Verdeck eines Cabriofahrzeugs kann geöffnet und geschlossen werden. Bei geschlossenem Verdeck soll die Klimaanlage auf herkömmliche Weise geregelt werden. Die Erfindung betrifft die Regelung der Klimaanlage bei geöffnetem Verdeck sowie den Übergang vom geöffneten zum geschlossenen Zustand des Verdecks bzw. vom geschlossenen zum geöffneten Zustand des Verdecks. Das Fahrzeug weist einen Fahrgastraum auf, dem über mehrere Ausströmöffnungen zur Klimatisierung Luft zugeführt wird, deren Temperatur und Massenstrom in Abhängigkeit zumindest von den Regelgrößen Soll-Fahrgastraumtemperatur und Ist-Fahrgastraumtemperatur geregelt wird.

Aus der WO 2004/052668 A1 ist ein Verfahren zur Regelung einer Klimaanlage für ein Cabriofahrzeug bekannt, bei dem im Falle des offenen Verdecks neben den herkömmlich für eine Klimatisierung bei geschlossenem Verdeck verwendeten Informationen über Umgebungstemperatur, solare Strahlung, Soll- und Ist-Innenraumtemperatur auch die Fahrzeuggeschwindigkeit berücksichtigt wird. Bei einem Anstieg der Fahrzeuggeschwindigkeit gegenüber einer vorhergehend erfassten Geschwindigkeit wird die Ausblastemperatur um einen Wert erhöht und der Luftmassenstrom konstant gehalten. Falls die Erhöhung der Ausblastemperatur nicht ausreicht, um eine Temperaturreduktion durch den Anstieg der Fahrzeuggeschwindigkeit zu kompensieren, wird zur Unterstützung der Luftmassenstrom um einen Wert erhöht. Alternativ könnte auch nur der Luftmassenstrom um einen Wert erhöht werden und die Ausblastemperatur konstant gehalten werden. Falls mit der Klimaanlage eine Kühlung erreicht werden soll, wird bei einem Anstieg der Fahrzeuggeschwindigkeit entweder die Ausblastemperatur um einen Wert erhöht und der Luftmassenstrom konstant gehalten oder es wird nur der Luftmassenstrom verringert.

Es hat sich herausgestellt, dass sowohl herkömmliche Regelungen der Klimaanlage, die für ein geschlossenes Verdeck optimiert sind, als auch Regelungen, die berücksichtigen, dass das Verdeck geöffnet ist, keine komfortable Klimatisierung für die Fahrzeuginsassen erreichen können. Die Temperaturverteilung innerhalb des Fahrgastraums bei geöffnetem Verdeck trägt in nicht ausreichendem Maße den Verhältnissen in diesem Zustand des Fahrzeugs Rechnung. Es wurde beispielsweise festgestellt, dass die Temperatur im Bereich des Fußraums zu hoch ist, die Temperatur im Bereich der Arme hingegen tendenziell zu niedrig ist. Außerdem sind vielfach die mit der Klimatisierung verbundenen Geräusche zu laut, was von den Fahrzeuginsassen als störend empfunden wird.

Aus der DE 102 35 580 A1 ist bereits eine Klimaanlage für Kabriofahrzeuge bekannt mittelsder die Klimatisierungsleistung im Fahrgastraum automatisch in Abhängigkeit von der Fahrzeuggeschwindigkeit einstellbar ist. Dabei ist die Klimaanlage zwischen zwei Betriebsmodi umschaltbar, nämlich einem Geschlossen-Fahrmodus, in dem die Klimaelektronik die Klimatisierungsleistung unabhängig von der Fahrzeuggeschwindigkeit einstellt und einem Offen-Fahrmodus in dem die Klimaelektronik die Klimatisierungsleistung in Abhängigkeit von der Fahrzeuggeschwindigkeit einstellt. Im Offen-Fahrmodus ist der Gesamtluftvolumenstrom über Luftauslässe im Amaturenbereich größer als im Geschlossen-Fahrmodus und der Gesamtluftvolumenstrom über die Luftauslässe im Fussraumbereich im Offen-Fahrmodus geringer als im Geschlossen-Fahrmodus.

Aus der EP 01 518 730 B1 ist ferner ein Regel- bzw. Steuerverfahren für eine Klimaanlage bekannt, mit einem ein offenes Dach dedektierenden Schritt zum dedektieren, ob wenigstens ein Dachabschnitt des Fahrzeugs offen ist oder nicht. In einem Schritt eines selektiven Ausblasens wird eine Ausblasmenge von behandelter Lufteingestellt, um die Menge der behandelten Luft von der Klimaanlagenluft-Ausblasöffnung einer vorderen Säule auf mehr als diejenige einer anderen Ausblasöffnung zu erhöhen, wenn für den Dachabschnitt des Fahrzeuges dedektiert wird offen zu sein, in Vergleich damit, wenn der Dachabschnitt dedektiert wird, geschlossen zu sein.

Es ist die Aufgabe der vorliegenden Erfindung, ein gattungsgemäßes Verfahren anzugeben, mit dem eine komfortablere Regelung der Klimaanlage bei einem Fahrzeug, dessen Verdeck geöffnet werden kann, erreicht werden kann, die zu einer angenehmen Klimatisierung der Fahrzeuginsassen in diesem Fahrzeugzustand führt.

Diese Aufgabe wird durch ein Verfahren mit den Merkmalen des Anspruchs 1 gelöst. Vorteilhafte Aus- und Weiterbildungen ergeben sich aus den Unteransprüchen.

Bei dem erfindungsgemäßen Verfahren werden bei einem geöffneten Verdeck andere Regelungsparameter für die Regelung der Klimaanlage verwendet als bei geschlossenem Verdeck und während des Öffnens und des Schließens Zwischenwerte dieser Regelungsparameter verwendet. Dabei nähern sich während des Öffnens die Zwischenwerte schneller den Regelungsparametern für ein geöffnetes Verdeck an, als sich die Zwischenwerte während des Schließens den Regelungsparametern für ein geschlossenes Verdeck annähern. Es hat sich herausgestellt, dass beim Öffnen beziehungsweise beim Schließen des Verdecks die Regelungsparameter des entsprechenden Modus zu schnell beziehungsweise zu langsam übernommen werden. Die Folge war eine zu heftige Reaktion der Klimaanlagenregelung beim Schließen des Daches und eine zu geringe Reaktion der Regelung beim Öffnen des Verdeckes. Die schnellere Übernahme der Regelungsparameter für ein geöffnetes Verdeck beim Öffnen des Verdeckes führt dazu, dass die äußeren Umweltbedingungen, das heißt der Einfluss der Außentemperatur und der Sonneneinstrahlung schneller kompensiert werden können. Andererseits erfolgt beim Schließen des Verdeckes ein sanfterer und insbesondere akustisch ansprechenderer Übergang der Klimaanlagenregelung für diesen Zustand des Verdeckes.

Bevorzugt wird die Fahrzeuggeschwindigkeit gemessen, und mit höher werdender Fahrzeuggeschwindigkeit der Luftmassenstrom, der durch niedriger gelegene Ausströmöffnungen dem Fahrgastraum zugeführt wird, verringert, und der Luftmassenstrom, der durch höher gelegene Ausströmöffnungen dem Fahrgastraum zugeführt wird, erhöht. Vorzugsweise wird somit mit höher werdender Fahrzeuggeschwindigkeit der Luftmassenstrom in zunehmendem Maße von Ausströmöffnungen für einen Fußraum des Fahrgastraums zu Ausströmöffnungen für den Rumpf und/oder die Hände und/oder die Arme bzw. Unterarme der Fahrzeuginsassen verlagert.

Das Verfahren kann sowohl im Heizbetrieb als auch im Kühlbetrieb der Klimaanlage eingesetzt werden. Es hat sich jedoch herausgestellt, dass es insbesondere im Heizbetrieb Vorteile bietet, bei dem die Temperatur der dem Fahrgastraum zugeführten Luft höher ist, als die Ist-Fahrgastraumtemperatur, da im Heizbetrieb bei geöffnetem Verdeck aufgrund des fehlenden Gegendrucks im Fahrgastraum mit steigender Geschwindigkeit mehr warme Luft ins Fahrzeug befördert wird. Dies führt bei herkömmlichen Regelungen der Klimaanlage dazu, dass die Füße der Fahrzeuginsassen zu warm werden. Eine solche Überheizung der Füße wird bei dem erfindungsgemäßen Verfahren vermieden, da die warme Luft verstärkt aus den so genannten Mannanströmern kommt. Diese Mannanströmer können insbesondere so ausgerichtet werden, dass die ausströmende warme Luft zum Wärmen der Hände und Unterarme genutzt wird. Bei geöffnetem Verdeck werden nämlich insbesondere diese Körperteile der Fahrzeuginsassen kühl. Außerdem wird auf diese Weise den bei höheren Geschwindigkeiten zunehmenden Verwirbelungen der Luft entgegengewirkt.

Der Luftmassenstrom wird üblicherweise über ein Gebläse gefördert, dessen Leistung über eine Grundgebläsespannungskennlinie geregelt wird. Gemäß einer bevorzugten Ausgestaltung des erfindungsgemäßen Verfahrens wird die Grundgebläsespannungskennlinie im Vergleich zu der Kennlinie bei der Klimaanlagenregelung bei einem geschlossene Verdeck abgesenkt. Der Fahrzeuginsasse setzt sich nämlich durch das Öffnen des Verdeckes des Cabriofahrzeugs bewusst in einem höheren Maße den vorhandenen klimatischen Randbedingungen aus. Er möchte den Fahrtwind, d.h. auch die Außentemperatur und die Sonnenstrahlung, spüren. Eine Klimatisierung durch eine automatische Klimaanlagenregelung ist in diesem Fall nur bedingt möglich, da ein abgeschlossener Fahrzeuginnenraum entfällt. Die Absenkung der Grundgebläsespannungskennlinie führt zu einer defensiven Regelung der Klimaanlage. Eine solche Regelung bei geöffnetem Verdeck hat den Vorteil, dass die Klimatisierung von den Fahrzeuginsassen nicht als störend oder aufdringlich empfunden wird.

Gemäß einer weiteren bevorzugten Ausgestaltung des erfindungsgemäßen Verfahrens wird die Gebläseleistung in Abhängigkeit von der Fahrzeuggeschwindigkeit begrenzt, wobei der Grenzwert von der Lautstärke des Gebläses abhängt. Der Grenzwert wird insbesondere so gewählt, dass die Gebläsegeräusche unter den Fahrströmungsgeräuschen, d.h. den sonstigen Strömungsgeräuschen, die bei der Fahrt auftreten, liegen. Die Strömungsverhältnisse und das Geräuschniveau ändern sich nämlich stark in Abhängigkeit von der Fahrgeschwindigkeit. Die sonstigen Strömungsgeräusche bei der Fahrt erhöhen sich mit zunehmender Geschwindigkeit, so dass in diesem Fall die Gebläsespannung und somit auch die Gebläseleistung der Klimaanlagenregelung so angehoben werden kann, dass die Gebläsegeräusche immer noch unterhalb den sonstigen Strömungsgeräuschen liegen. Es kann in diesem Fall jedoch der Wärmeentzug bzw. der Wärmeeintrag besser kompensiert werden.

Die Fahrströmungsgeräusche können beispielsweise während der Fahrt gemessen werden, so dass die Gebläseleistung und die mit dieser Leistung zusammenhängende Lautstärke des Gebläses immer aktuell an die jeweiligen Fahrströmungsgeräusche angepasst werden kann. Die Fahrströmungsgeräusche können jedoch auch im Voraus bestimmt werden. In diesem Fall wird der Grenzwert für die Gebläseleistung über eine Kennlinie gewählt, welche die Gebläsegeräusche in Abhängigkeit von der Gebläseleistung sowie die Fahrströmungsgeräuschen in Abhängigkeit von der Fahrgeschwindigkeit enthält.

Gemäß einer weiteren bevorzugten Ausgestaltung des erfindungsgemäßen Verfahrens wird die auf den Fahrgastraum auftreffende solare Strahlung gemessen, und die Messwerte der solaren Strahlung sind eine weitere Regelgröße für die Regelung der Temperatur und/oder des Massenstroms der dem Fahrgastraum zugeführten Luft. Erfindungsgemäß ist der Einfluss der Messwerte der solaren Strahlung bei geöffnetem Verdeck stärker als derjenige bei der Klimaanlagenregelung bei einem geschlossenen Verdeck.

Bei der Regelung der Klimaanlage ist jeder Regelgröße eine Zeitkonstante zugeordnet, die bestimmt, wie schnell sich eine Veränderung der Regelgröße auf die Temperatur und/oder den Massenstrom der Luft auswirkt, die dem Fahrgastraum zugeführt wird. Erfindungsgemäß wird die Zeitkonstante, die der solaren Strahlung zugeordnet ist, bei geöffnetem Verdeck im Vergleich zu dem Wert bei geschlossenem Verdeck verkleinert. Dies hat zur Folge, dass die Klimaanlagenregelung schneller auf eine Änderung der solaren Strahlung reagiert. Der Durchgriff der Sonnenstrahlung ist nämlich bei geöffnetem Verdeck sehr viel stärker als bei geschlossenem Verdeck. Die Fahrzeuginsassen sind der Sonnenstrahlung gegebenenfalls direkt ausgesetzt. Auch wird die Sonnenstrahlung nicht mehr durch die Fahrzeugverglasung gefiltert, so dass die Wirkung der Sonnenstrahlung auf die Fahrzeuginsassen schneller ist. Eine schnellere Reaktion der Klimaanlagenregelung auf eine sich ändernde Sonnenstrahlung wirkt sich somit positiv auf die Klimatisierung des Fahrgastraumes aus.

Bei herkömmlichen Klimaanlagen wird die solare Strahlung bei zumindest zwei Positionen, insbesondere bezüglich der Fahrtrichtung auf der rechten und linken Seite gemessen. Hierdurch kann der Wärmeeintrag durch die Sonneneinstrahlung bei der Klimatisierung besser berücksichtigt werden. Es kann beispielsweise die Seite weniger erwärmt beziehungsweise stärker gekühlt werden, auf welche Sonnenstrahlung trifft. Erfindungsgemäß bleiben jedoch Unterschiede der Messwerte bei verschiedenen Positionen bei geöffnetem Verdeck bei der Regelung der Temperatur und/oder des Massenstroms der dem Fahrgastraum zugeführten Luft unberücksichtigt. Bei geöffnetem Verdeck sind nämlich alle Fahrzeuginsassen der am höchsten gemessenen Sonnenstrahlung gleichermaßen ausgesetzt. Vorzugsweise geht daher dieser Messwert in die Klimaregelung für alle Zonen des Fahrgastraums ein.

Gemäß einer weiteren bevorzugten Ausgestaltung des erfindungsgemäßen Verfahrens wird der bei der Regelung verwendete Wert für die Ist-Fahrgastraumtemperatur aus dem Messwert eines Fahrgastraum-Temperatursensors und dem Messwert eines Außentemperatursensors berechnet. Es wird insbesondere der in die Regelung eingehende Wert für die Ist-Fahrgastraumtemperatur aus Anteilen des Messwertes des Fahrgastraum-Temperatursensors und des Außentemperatursensors berechnet. Der auf diese Weise berechnete Wert für die Ist-Fahrgastraumtemperatur wird insbesondere bei einer Kühlung des Fahrgastraums durch die Klimaanlage verwendet, das heißt, wenn die Temperatur der Luft, die dem Fahrgastraum zugeführt wird, geringer ist als der Messwert des Fahrgastraum-Temperatursensors. Es hat sich nämlich herausgestellt, dass bei geöffnetem Verdeck eine unzureichende Klimatisierung dadurch herbeigeführt wird, dass der in die Regelung für die Ist-Fahrgastraumtemperatur eingehende Wert falsch berechnet wird. Diese Fehlfunktion der Klimaanlagenregelung wird durch das erfindungsgemäße Verfahren durch die angegebene Berechnung der Ist-Fahrgastraumtemperatur vermieden. Dies hat den Vorteil, dass die Fahrzeuginsassen bei geöffnetem Verdeck nicht manuell in die Klimaanlagenregelung eingreifen müssen. Eine angenehme Klimatisierung wird weiterhin durch eine automatische Klimaanlagenregelung erreicht.

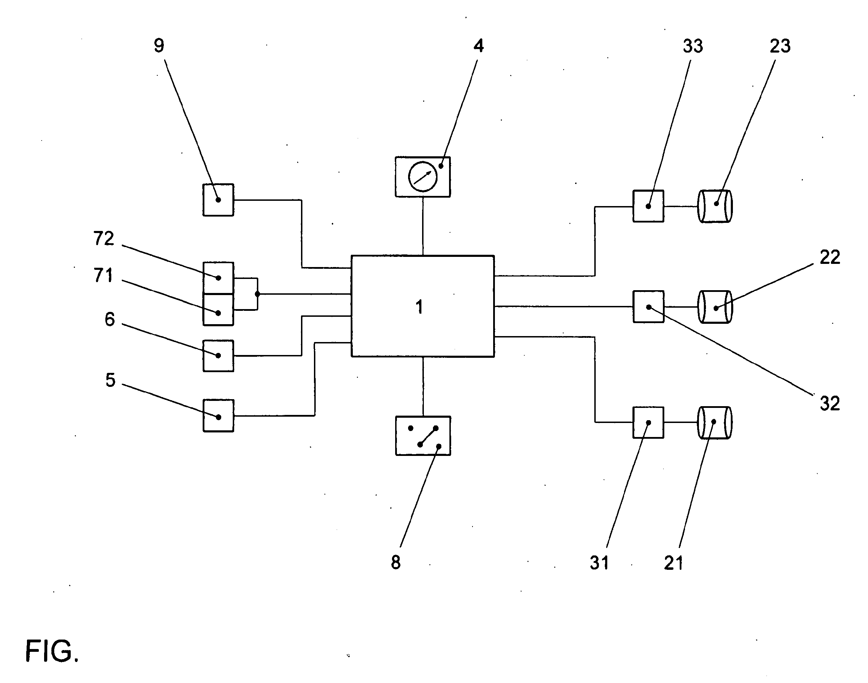

Die Erfindung wird nun an Hand von Ausführungsbeispielen mit Bezug zu der Figur erläutert.

Die Figur zeigt schematisch ein Beispiel einer Regelvorrichtung für eine Klimaanlage, mit welcher das erfindungsgemäße Verfahren durchgeführt werden kann.

Es soll der Fahrgastraum eines Cabriofahrzeugs klimatisiert werden. Hierfür ist eine Klimaanlage vorgesehen, die in Abhängigkeit von verschiedenen Regelgrößen die Klimatisierung im Fahrgastraum regelt. Für die Klimatisierung des Fahrgastraums sind eine Vielzahl von Ausströmöffnungen vorgesehen, welche verschiedenen Zonen des Fahrgastraums Luft zuführen, deren Temperatur und Massenstrom geregelt wird.

In der Figur ist die Menge der Ausströmöffnungen, welche für den Fußraum des Fahrgastraums vorgesehen sind, mit 21 bezeichnet, die Menge der Ausströmöffnungen, welche dem Rumpf, den Händen und den Armen der Fahrzeuginsassen Luft zuführen mit 22 bezeichnet und die Menge der Einströmöffnungen, welche in den oberen Bereich des Fahrgastraums, insbesondere in Richtung der Windschutzscheibe gerichtet sind, mit 23 bezeichnet. Die Ausströmöffnungen 22 werden auch als Mannanströmer bezeichnet. Diese Aufteilung der Anströmöffnungen ist nur beispielhaft. Selbstverständlich können auch andere Aufteilungen gewählt werden. In jedem Fall gibt es jedoch niedriger gelegene Ausströmöffnungen und höher gelegene Ausströmöffnungen.

Jeder Ausströmöffnung oder jeder Menge an Ausströmöffnungen 21, 22 und 23 ist jeweils ein Steuergerät zugeordnet, welches für die jeweiligen Ausströmöffnungen die Temperatur der dem Fahrgastraum zugeführten Luft und den Luftmassenstrom regelt. Den Ausströmöffnungen 21 für den Fußraum ist das Steuergerät 31 zugeordnet, den so genannten Mannanströmern 22 ist das Steuergerät 32 zugeordnet und den oberen Ausströmöffnungen 23 ist das Steuergerät 33 zugeordnet.

Die Steuergeräte 31, 32, und 33 sind mit einem zentralen Steuergerät 1 verbunden, welches den Steuergeräten 31, 32, und 33 Signale übermittelt, die angeben, wieviel Luft mit welcher Temperatur über die jeweiligen Ausströmöffnungen 21, 22 und 23 in den Fahrgastraum gelangen soll.

Das zentrale Steuergerät 1 ist ferner mit einer Eingabeeinrichtung 4 verbunden, über welche die Fahrzeuginsassen die Soll-Fahrgastraumtemperatur wählen können.

Ferner ist das zentrale Steuergerät 1 mit verschiedenen Sensoren verbunden, die neben der Soll-Fahrgastraumtemperatur weitere Regelgrößen für die Klimaanlagenregelung liefern. Es ist insbesondere ein Temperatursensor 5 innerhalb des Fahrgastraums und ein Temperatursensor 6 für die Außentemperatur vorgesehen. Ferner sind zwei Sensoren 71 und 72 für die solare Strahlung auf der rechten und linken Seite des Cabriofahrzeugs vorgesehen. Die Messwerte dieser Sensoren 5, 6, 71 und 72 werden an das zentrale Steuergerät 1 übertragen. Außerdem ist das zentrale Steuergerät 1 mit einem Sensor 8 verbunden, welcher anzeigt, ob das Verdeck des Cabriofahrzeugs geöffnet oder geschlossen ist. Ermittelt das zentrale Steuergerät 1 an Hand des Sensors 8, dass sich das Verdeck in einem geschlossenen Zustand befindet, wird die Klimaanlage auf an sich bekannte Weise geregelt. Insbesondere an Hand der Regelgrößen für die Temperatur innerhalb des Fahrgastraums, der Außentemperatur und der gemessenen solaren Strahlung ermittelt das zentrale Steuergerät 1 Steuergrößen für die Steuergeräte 31, 32 und 33 und bestimmt damit, wie viel Luft mit welcher Temperatur dem Fahrgastraum über welche Ausströmöffnungen zugeführt wird, damit auf für die Fahrzeuginsassen angenehme Weise die Differenz zwischen der Soll-Fahrgastraumtemperatur und der Ist-Fahrgastraumtemperatur verringert wird.

Stellt das zentrale Steuergerät 1 an Hand des Sensors 8 fest, dass sich das Verdeck in einem geöffneten Zustand befindet, ändert das zentrale Steuergerät 1 erfindungsgemäß die Regelung der Klimaanlage wie es im Folgenden beschrieben wird:

Zunächst wird die Fahrzeuggeschwindigkeit gemessen. Hierfür wird ein üblicherweise in jedem Fahrzeug befindlicher Geschwindigkeitsmesser 9 verwendet. Die Daten dieses Schwierigkeitsmessers 9 können beispielsweise über den Fahrzeugbus dem zentralen Steuergerät 1 übermittelt werden In dem zentralen Steuergerät 1 ist eine Kennlinie gespeichert, die angibt, wie viel Luft bei welcher Temperatur über die jeweiligen Ausströmöffnungen 21, 22 und 23 dem Fahrgastraum zugeführt werden soll. Diese Kennlinie für ein geöffnetes Verdeck ist so ausgebildet, dass mit höher werdender Fahrzeuggeschwindigkeit der Luftmassenstrom, der durch niedriger gelegene Ausströmöffnungen, das heißt durch die Ausströmöffnungen 21, dem Fahrgastraum zugeführt wird, verringert wird und der Luftmassenstrom, der durch höher gelegene Ausströmöffnungen, das heißt insbesondere durch die Mannanströmer 22, dem Fahrgastraum zugeführt wird, erhöht wird.

Gemäß einer anderen Ausgestaltung dieses Ausführungsbeispiels wäre es auch möglich, die Temperatur der Luft, welche durch niedriger gelegene Ausströmöffnungen 21 dem Fahrgastraum zugeführt wird, zu erniedrigen und die Temperatur, die durch höher gelegene Ausströmöffnungen 22 dem Fahrgastraum zugeführt wird, zu erhöhen. Außerdem ist eine Kombination der Verringerung des Luftmassenstroms und der Temperatur der Luft, die durch die niedriger gelegenen Ausströmöffnungen 21 dem Fahrgastraum zugeführt wird, und eine Erhöhung des Luftmassenstroms und der Temperatur der Luft, die durch höher gelegene Ausströmöffnungen 22 dem Fahrgastraum zugeführt wird, möglich.

Es wird hierdurch dem Effekt entgegengewirkt, dass die Klimaanlage bei geöffnetem Verdeck den Fußraum zu stark aufheizt. Die Verteilung des Luftmassenstroms beziehungsweise der Temperatur auf die verschiedenen Ausströmöffnungen 21 und 22 kann sowohl im Heizbetrieb als auch im Kühlbetrieb verwendet werden. Bei dem vorliegenden Ausführungsbeispiel wird diese Verteilung jedoch nur im Heizbetrieb gewählt, da insbesondere hier das Problem einer möglichen Überhitzung des Fußraums auftritt.

Die Steuergeräte 31, 32, und 33 für die Ausströmöffnungen 21, 22 und 23 versorgen mehrere Gebläse, welchen für die jeweiligen Ausströmöffnungen 21, 22 und 23 vorgesehen sind, mit einer bestimmten Spannung. Hierüber wird die Gebläseleistung gesteuert. Bei einem geöffneten Verdeck neigt die Klimaanlagenregelung dazu, einen sehr hohen Luftmassenstrom zu wählen, um den erhöhten Energieaustausch zwischen Fahrgastraum und dem Außenraum auszugleichen. Eine hohe Gebläseleistung führt einerseits zwar zu einem hohen Luftmassenstrom durch die jeweilige Ausströmöffnung 21, 22 oder 23. Eine höhere Leistung führt jedoch auch zu einer höheren Lautstärke des Gebläses im Fahrgastraum, was zu einer akustischen Belästigung der Fahrzeuginsassen führen kann. Um dies zu verhindern, wird bei geöffnetem Verdeck die Grundgebläsespannungskennlinie, welche die Leistung des Gebläses regelt, gewählt, die im Vergleich zu der Grundgebläsespannungskennlinie bei der Klimaanlagenregelung bei geschlossenem Verdeck abgesenkt ist. Hierdurch wird bei geöffnetem Verdeck die Geräuschbelästigung durch das Gebläse der Klimaanlage verringert.

Außerdem ist in dem zentralen Steuergerät 1 eine Kennlinie gespeichert, welche die Gebläsegeräusche in Abhängigkeit von der Gebläseleistung sowie die Fahrströmungsgeräusche, die unabhängig von dem Gebläse bei geöffnetem Verdeck auftreten, in Abhängigkeit von der Fahrgeschwindigkeit enthält. An Hand dieser Kennlinie wird ein Grenzwert für die Gebläseleistung bestimmt, der so gewählt wird, dass die Gebläsegeräusche unter den sonstigen Fahrströmungsgeräuschen liegen. Die Gebläseleistung wird somit in

Abhängigkeit von der Fahrzeuggeschwindigkeit begrenzt, wobei der Grenzwert von der Lautstärke des Gebläses abhängt.

Des Weiteren wird bei einem geöffneten Verdeck der Einfluss der Messwerte für die solare Strahlung, welche dem zentralen Steuergerät 1 über den Sensoren 71 und 72 übermittelt werden, geändert. Bei geöffnetem Verdeck wird der Einfluss der solaren Strahlung als Regelgröße vergrößert. Gleichzeitig wird die Zeitkonstante, welche angibt wie schnell die Klimaanlagenregelung auf Änderungen der solaren Strahlung reagiert, verkürzt.

Bei geschlossenem Verdeck werden verschiedene Zonen des Fahrgastraums unterschiedlich klimatisiert, je nachdem wie die Messwerte für die solare Strahlung bei verschiedenen Positionen ausfallen. Dies ändert sich bei der Klimaanlagenregelung bei geöffnetem Verdeck. In diesem Fall wird der höchste Wert für die solare Strahlung als Regelgröße für die Klimaanlagenregelung verwendet. Dieser Wert gilt dann für alle Zonen des Fahrgastraums, das heißt insbesondere sowohl auf der rechten als auch auf der linken Seite des Fahrgastraums.

Des Weiteren ändert das zentrale Steuergerät 1 die Berechnung des Wertes für die Ist-Fahrgastraumtemperatur für die Klimaanlagenregelung. Bei geschlossenem Verdeck wird der Messwert des Fahrgastraum-Temperatursensors 5 direkt als Wert für die Ist-Fahrgastraumtemperatur bei der Klimaanlagenregelung verwendet. Bei geöffnetem Verdeck wird der für die Klimaanlagenregelung verwendete Wert für die Ist-Fahrgastraumtemperatur aus dem Messwert des Fahrgastraum-Temperatursensors 5 und dem Messwert des Außentemperatursensors 6 berechnet. Der Wert für die Ist-Fahrgastraumtemperatur setzt sich aus bestimmten Anteilen des Messwerts des Fahrgastraum-Temperatursensors 5 und des Messwerts des Außentemperatursensors 6 zusammen. Beispielsweise kann der Messwert des Fahrgastraum-Temperatursensors 5 zu 70% berücksichtigt werden und der Messwert des Außentemperatursensors 6 zu 30%.

Schließlich betrifft die Klimaanlagenregelung noch den Übergang der Regelung bei geschlossenem Verdeck zu der Regelung bei geöffnetem Verdeck und umgekehrt. Hierfür zeigt der Sensor 8 dem zentralen Steuergerät 1 an, ob sich das Verdeck gerade öffnet oder schließt. Während des Öffnens beziehungsweise Schließens werden bei der Klimaanlagenregelung Zwischenwerte der Regelungsparameter für den Zustand bei geöffnetem Verdeck und den Zustand bei geschlossenem Verdeck verwendet. Der Übergang zu den beiden Zuständen erfolgt jedoch nicht linear. Vielmehr nähern sich während des Öffnens des Verdecks die Zwischenwerte schneller den Regelungsparametern für ein geöffnetes Verdeck an, als sich die

Zwischenwerte während des Schließens den Regelungsparametern für ein geschlossenes Verdeck annähern. Beispielsweise erfolgt die Annäherung beim Öffnen des Verdecks schneller als eine lineare Annäherung. Beim Schließen des Verdecks erfolgt die Annäherung hingegen langsamer als bei einer linearen Annäherung. Somit werden beim Öffnen des Verdecks die Regelungsparameter für das geöffnete Verdeck bereits erreicht, obwohl das Verdeck noch nicht vollständig geöffnet ist. Andererseits erfolgt beim Schließen des Verdecks ein sehr sanfter Übergang zu den Regelungsparametern bei geschlossenem Verdeck, so dass die Regelungsparameter für das geschlossene Verdeck erst dann erreicht werden, wenn das Verdeck bereits geschlossen ist.

### Bezugszeichenliste

- 1: Zentrales Steuergerät
- 21, 22, 23: Ausströmöffnungen
- 31, 32, 33: Steuergeräte für die Ausströmöffnungen
- 4: Eingabeeinrichtung
- 5: Temperatursensor für den Fahrgastraum
- 6: Außentemperatursensor
- 71, 72: Sensoren für die solare Strahlung bei verschiedenen Positionen
- 8: Sensor zum Erfassen des Zustands des Verdecks
- 9: Geschwindigkeitssensor

## Patentansprüche

1. Verfahren zum Regeln einer Klimaanlage eines Fahrzeugs, dessen Verdeck geöffnet werden kann, wobei einem Fahrgastraum des Fahrzeugs über mehrere Ausströmöffnungen (21, 22, 23) Luft zugeführt wird, deren Temperatur und Massenstrom in Abhängigkeit zumindest von den Regelgrößen Soll-Fahrgastraumtemperatur und Ist-Fahrgastraumtemperatur geregelt wird und bei einem geöffneten Verdeck andere Regelungsparameter für die Regelung der Klimaanlage verwendet werden als bei geschlossenem Verdeck, **dadurch gekennzeichnet, dass** während des Öffnens und Schließens Zwischenwerte der Regelungsparameter verwendet werden, wobei während des Öffnens sich die Zwischenwerte schneller den Regelungsparametern für ein geöffnetes Verdeck annähern als sich die Zwischenwerte während des Schließens den Regelungsparametern für ein geschlossenes Verdeck annähern.

2. Verfahren nach Anspruch 1, **dadurch gekennzeichnet, dass** die Fahrzeuggeschwindigkeit ermittelt wird und mit höher werdender Fahrzeuggeschwindigkeit der Luftmassenstrom, der durch niedriger gelegene Ausströmöffnungen (21) dem Fahrgastraum zugeführt wird, verringert wird und/oder der Luftmassenstrom, der durch höher gelegene Ausströmöffnungen (22) dem Fahrgastraum zugeführt wird, erhöht wird oder mit höher werdender Fahrzeuggeschwindigkeit der Luftmassenstrom in zunehmendem Maße von Ausströmöffnungen (21) für den Fußraum des Fahrgastraums zu Ausströmöffnungen (22) für den Rumpf und/oder die Hände und/oder die Unterarme der Fahrzeuginsassen verlagert wird.

3. Verfahren nach Anspruch 1 oder 2, **dadurch gekennzeichnet, dass** die Temperatur der dem Fahrgastraum zugeführten Luft höher ist; als die Ist-Fahrgastraumtemperatur.

4. Verfahren nach einem der vorhergehenden Ansprüche, **dadurch gekennzeichnet, dass** der Luftmassenstrom über ein Gebläse gefördert wird, dessen Leistung über eine Grundgebläsespannungskennlinie geregelt wird, und dass die Grundgebläsespannungskennlinie abgesenkt ist, im Vergleich zu der Grundgebläsespannungskennlinie bei der Klimaanlagenregelung bei einem geschlossenen Verdeck.

5. Verfahren nach einem der vorhergehenden Ansprüche, **dadurch gekennzeichnet, dass** der Luftmassenstrom über ein Gebläse gefördert wird, dass die Gebläseleistung in Abhängigkeit von der Fahrzeuggeschwindigkeit begrenzt wird und der Grenzwert von der Lautstärke des Gebläses abhängt.

6. Verfahren nach Anspruch 5, **dadurch gekennzeichnet, dass** der Grenzwert so gewählt wird, dass die Gebläsegeräusche unter den Fahrzeugströmungsgeräuschen liegen.

7. Verfahren nach Anspruch 5 oder 6, **dadurch gekennzeichnet, dass** die Fahrströmungsgeräusche gemessen werden.

8. Verfahren nach einer der Ansprüche 5 bis 7, **dadurch gekennzeichnet, das** die Fahrströmungsgeräusche im Voraus bestimmt werden und der Grenzwert für die Gebläseleistung über eine Kennlinie gewählt wird, welche die Gebläsegeräusche in Abhängigkeit von der Gebläseleistung sowie die Fahrströmungsgeräusche in Abhängigkeit von der Fahrgeschwindigkeit enthält.

9. Verfahren nach einem der vorhergehenden Ansprüche, **dadurch gekennzeichnet, dass** die auf dem Fahrgastraum auftreffende solare Strahlung gemessen wird und die Messwerte der solaren Strahlung eine weitere Regelgröße für die Regelung der Temperatur und/oder des Massenstroms der dem Fahrgastraum zugeführten Luft sind, wobei der Einfluss der Messwerte der solaren Strahlung bei geöffnetem Verdeck stärker ist als derjenige bei der Klimaanlagenregelung bei einem geschlossenen Verdeck.

10. Verfahren nach Anspruch 9, **dadurch gekennzeichnet, dass** die solare Strahlung bei zumindest zwei Positionen gemessen wird und dass Unterschiede der Messwerte bei verschiedenen Positionen bei der Regelung der Temperatur und/oder des Massenstroms der dem Fahrgastraum zugeführten Luft unberücksichtigt bleiben.

11. Verfahren nach einem der vorhergehenden Ansprüche, **dadurch gekennzeichnet, dass** der bei der Regelung verwendete Wert für die Ist-Fahrgastraumtemperatur aus dem Messwert eines Fahrgastraum-Temperatursensors (5) und dem Messwert eines Außentemperatursensors (6) berechnet wird.

12. Verfahren nach einem der Ansprüche 2 oder 3 bis 11 in Kombination mit Anspruch 2, **dadurch gekennzeichnet, dass** mit höher werdender Fahrzeuggeschwindigkeit die Veränderung des Luftmassenstroms über mehrere Stufen oder kontinuierlich erfolgt.

13. Verfahren nach Anspruch 12, **dadurch gekennzeichnet, dass** bei einer Rückkehr zu einer niedrigeren Fahrzeuggeschwindigkeit die Änderung des Luftmassenstroms in umgekehrter Weise erfolgt.

## Claims

1. Method for controlling an air-conditioning system of a vehicle whose top can be opened, wherein air is fed to a passenger compartment of the vehicle via a plurality of outflow openings (21, 22, 23), the temperature and mass flow of which are controlled at least as a function of the control variables of the setpoint passenger compartment temperature and actual passenger compartment temperature, and when the top is opened different control parameters are used for controlling the air conditioning system from those when the top is closed, **characterized in that** intermediate values of the control parameters are used during the opening and closing processes, wherein during the opening process the intermediate values approach the control parameters for an opened top more quickly than the intermediate values approach the control parameters for a closed top during the closing process.

2. Method according to Claim 1, **characterized in that** the vehicle speed is determined and as the vehicle speed becomes higher the air mass flow which is fed to the passenger compartment through outflow openings (21) which are located at a relatively low position is reduced and/or the air mass flow which is fed to the passenger compartment through outflow openings (22) which are located at a relatively high position is increased or as the vehicle speed becomes higher the air mass flow is increasingly transferred from outflow openings (21) for the foot well of the passenger compartment to outflow openings (22) for the rear and/or the hands and/or the underarms of the vehicle occupants.

3. Method according to Claim 1 or 2, **characterized in that** the temperature of the air which is fed to the passenger compartment is higher than the actual passenger compartment temperature.

4. Method according to one of the preceding claims, **characterized in that** the air mass flow is fed via a blower whose power is controlled by means of a basic blower voltage characteristic curve, and **in that** the basic blower voltage characteristic curve is lowered compared to the basic blower voltage characteristic curve when an air-conditioning system is being controlled when a top is closed.

5. Method according to one of the preceding claims, **characterized in that** the air mass flow is fed by means of a blower, **in that** the blower power is limited as a function of the vehicle speed, and the limiting value depends on the sound volume of the blower.

6. Method according to Claim 5, **characterized in that** the limiting value is selected such that the blower noise is below the air stream noise of the vehicle.

7. Method according to Claim 5 or 6, **characterized in that** the air stream noise is measured.

8. Method according to one of Claims 5 to 7, **characterized in that** the air stream noise is determined in advance and the limiting value for the blower power is selected over a characteristic curve which contains the blower noise as a function of the blower power and the air stream noise as a function of the velocity.

9. Method according to one of the preceding claims, **characterized in that** the solar radiation impinging on the passenger compartment is measured, and the measured values of the solar radiation are a further control variable for controlling the temperature and/or the mass flow of the air supplied to the passenger compartment, wherein the influence of the measured values of the solar radiation when the top is opened is greater than that when an air-conditioning system is being controlled when a top is closed.

10. Method according to Claim 9, **characterized in that** the solar radiation is measured at at least two positions, and **in that** differences between the measured values at different positions are not taken into account in the control of the temperature and/or of the mass flow of the air fed to the passenger compartment.

11. Method according to one of the preceding claims, **characterized in that** the value which is used for the actual passenger compartment temperature in the control process is calculated from the measured value of a passenger compartment temperature sensor (5) and the measured value of an external temperature sensor (6).

12. Method according to one of Claims 2 or 3 to 11 in combination with Claim 2, **characterized in that** as the vehicle speed becomes higher the change in the air mass flow takes place over several increments or continuously.

13. Method according to Claim 12, **characterized in that** when there is a return to a relatively low vehicle speed the change in the air mass flow takes place in an inverted fashion.

## Revendications

1. Procédé de réglage d'une installation de climatisation d'un véhicule dont la capote peut être ouverte, de l'air étant amené dans un habitacle du véhicule via plusieurs ouvertures d'aération (21, 22, 23) pour lequel la température et le flux massique sont réglés en fonction au moins des grandeurs de réglage de la température théorique de l'habitacle et de la température réelle de l'habitacle et en ce que lorsque la capote est ouverte, d'autres paramètres de réglage sont utilisés pour le réglage de l'installation de climatisation que lorsque la capote est fermée, **caractérisé en ce que** pendant l'ouverture et la fermeture, des valeurs intermédiaires des paramètres de réglage sont utilisées, les valeurs intermédiaires s'approchant plus vite pendant l'ouverture des paramètres de réglage pour une capote ouverte que les valeurs intermédiaires pendant la fermeture des paramètres de réglage pour une capote fermée.

2. Procédé selon la revendication 1, **caractérisé en ce que** la vitesse du véhicule est calculée et que lorsque la vitesse du véhicule augmente, le flux massique d'air qui est amené dans l'habitacle à travers les ouvertures d'aération (21) les plus basses est réduit et/ou le flux massique d'air qui est amené dans l'habitacle à travers les ouvertures d'aération (22) les plus hautes est accru ou lorsque la vitesse du véhicule augmente, le flux massique d'air est déplacé de façon croissante en partant des ouvertures d'aération (21) prévues pour l'espace de pieds de l'habitacle en direction des ouvertures d'aération (22) prévues pour le torse et/ou les mains et/ou les avant-bras des passagers du véhicule.

3. Procédé selon la revendication 1 ou 2, **caractérisé en ce que** la température de l'air amené dans l'habitacle est plus élevée que la température réelle de l'habitacle.

4. Procédé selon l'une quelconque des revendications précédentes, **caractérisé en ce que** le flux massique d'air est amené via une soufflante dont la performance est réglée de façon à être supérieure à une ligne caractéristique de tension de soufflante de base et **en ce que** la ligne caractéristique de tension de soufflante de base est rabaissée en comparaison à la ligne caractéristique de tension de soufflante de base pour l'installation de réglage de climatisation lorsque la capote est fermée.

5. Procédé selon l'une quelconque des revendications précédentes, **caractérisé en ce que** le flux massique d'air est amené via une soufflante qui limite la performance de soufflante en fonction de la vitesse du véhicule et **en ce que** la valeur limite dépend de la puissance sonore de la soufflante.

6. Procédé selon la revendication 5, **caractérisé en ce que** la valeur limite est choisie de telle sorte que les bruits de soufflante soient inférieurs aux bruits de flux d'air du véhicule.

7. Procédé selon la revendication 5 ou 6, **caractérisé en ce que** les bruits de flux d'air sont mesurés en situation de conduite.

8. Procédé selon l'une quelconque des revendications 5 à 7, **caractérisé en ce que** les bruits de flux d'air en conduite sont déterminés à l'avance et **en ce que** la valeur limite pour la performance de soufflante est choisie par l'intermédiaire d'une ligne caractéristique qui choisit les bruits de soufflante en fonction de la performance de la soufflante ainsi que des bruits de flux d'air dépendant de la vitesse de conduite.

9. Procédé selon l'une quelconque des revendications précédentes, **caractérisé en ce que** le rayonnement solaire pénétrant l'habitacle est mesuré et **en ce que** les valeurs mesurées du rayonnement solaire sont une autre grandeur de réglage pour le réglage de la température et/ou des flux massiques de l'air amené dans l'habitacle, l'influence des valeurs mesurées du rayonnement solaire étant plus forte lorsque la capote est ouverte que pour le réglage de l'installation de climatisation avec capote fermée.

10. Procédé selon la revendication 9, **caractérisé en ce que** le rayonnement solaire est mesuré en au moins deux positions et **en ce que** les différences des valeurs mesurées aux différentes positions ne sont pas prises en compte lors du réglage de la température et/ou du flux massique de l'air amené dans l'habitacle.

11. Procédé selon l'une quelconque des revendications précédentes, **caractérisé en ce que** la valeur utilisée pour le réglage pour la température réelle de l'habitacle est calculée à partir de la valeur mesurée par un capteur de température (5) de l'habitacle et la valeur mesurée d'un capteur de température extérieur (6).

12. Procédé selon l'une quelconque des revendications 2 ou 3 à 11 en combinaison avec la revendication 2, **caractérisé en ce qu'**avec la vitesse du véhicule augmentant, la modification du flux massique d'air se produit par différents paliers ou en continu.

13. Procédé selon la revendication 12, **caractérisé en ce que** lorsque l'on revient à une vitesse inférieure du véhicule, la modification du flux massique d'air se produit de façon inversée.
